# EUROPEAN PATENT APPLICATION

(11) **EP 4 474 978 A1**
(43) Date of publication of application: **11.12.2024**
(21) Application number: 24180152.1
(22) Date of filing: 05.06.2024
(51) Int. Cl.: G06F 8/41

(54) **ELECTRONIC DEVICE AND METHOD WITH HARDWARE-OPTIMIZED COMPILATION**

(30) Priority: 08.06.2023 KR 20230073600; 02.08.2023 KR 20230101276
(71) Applicant: Samsung Electronics Co., Ltd., Suwon-si, Gyeonggi-do 16677 (KR)
(72) Inventor: Kim, Bongjun, 16678 Suwon-si, Gyeonggi-do (KR); Lee, Gyeongmin, 16678 Suwon-si, Gyeonggi-do (KR); Jung, Hanwoong, 16678 Suwon-si, Gyeonggi-do (KR)
(74) Representative: Grünecker Patent- und Rechtsanwälte PartG mbB

(57) **Abstract**

An operating method of an electronic device includes: generating, based on a hardware representation of a target device, a mapping by mapping hardware components represented in the hardware representation of the target device to one or more hardware-component traits and to one or more drivers; and generating, based on the hardware representation, topology information representing a connection relationship and dependency between the hardware components of the target device represented in the hardware representation, wherein the hardware representation includes representations of the hardware components tagged with the one or more hardware-component traits and representations of the one or more drivers and a hierarchical structure between the hardware components.

## Description

### BACKGROUND

### 1. Field

The present disclosure relates to an electronic device and method with hardware-optimized compilation.

### 2. Description of Related Art

A compiler is a software tool that translates code written in a programming language into another, generally lower form of code, for example machine-executable code or bytecode. A compiler generally parses and analyzes code to generate target code according to the analysis. To optimize the efficiency of the code output from the compiler, compiler optimization techniques are employed. Compiler optimization may be generally used to improve the execution speed of a program, to minimize the size of memory used by a program while the program is executed, or to improve other aspects of performance.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is what is claimed in the independent claims. Preferred embodiments are specified in the dependent claims.

In one general aspect, an operating method of an electronic device includes: generating, based on a hardware representation of a target device, a mapping by mapping hardware components represented in the hardware representation of the target device to one or more hardware-component traits and to one or more drivers; and generating, based on the hardware representation, topology information representing a connection relationship and dependency between the hardware components of the target device represented in the hardware representation, wherein the hardware representation includes representations of the hardware components tagged with the one or more hardware-component traits and representations of the one or more drivers and a hierarchical structure between the hardware components.

The one or more hardware-component traits may indicate software executable by the hardware components.

The one or more hardware-component traits may be included in a first set in which traits of standardized hardware components are standardized, the one or more drivers may be included in a second set in which operations performable by the standardized hardware components are standardized, and combinations of operations of the respective drivers in the second set may be included in a third set.

The mapping may include a first mapping table mapping between the one or more hardware-component traits and the hardware components and a second mapping table mapping between the one or more drivers and the hardware components.

The operating method may further include: receiving a query about the hardware components from a compiler compiling a target application to execute on the target device; generating a response to the query based on the first container and/or the second container; transmitting the response to the compiler; and optimizing, by the compiler, the compiling of the target application to execute on the target device based on the response.

The query may be either a query regarding whether one of the hardware components includes a predetermined hardware-component trait, a query regarding whether one of the hardware components includes a predetermined driver, or a query regarding whether one of the hardware components is included in a predetermined topology.

The generating the response to the query may be based on the mapping, which includes a first mapping table mapping between the one or more hardware-component traits and the hardware components, a second mapping table including mapping information between the one or more drivers and the hardware components, or the hardware representation, which includes the topology information.

The generating mapping and the topology information may be performed based on compiling a target application for execution on the target device, and wherein the compiling optimizes the target application to execute on the target device based on the mapping and topology information.

In another general aspect, an operating method of an electronic device includes: receiving a target application and a hardware representation of a target device; generating a query on mapping tables and/or topology information, by a compiler; and compiling, by the compiler, the target application to execute on the target device based on a response to the query, wherein the mapping tables are based on the hardware representation and indicate which hardware components included in the target device are mapped to (i) which hardware-component traits and to (ii) which drivers, and the topology information is based on the hardware representation and indicates a connection relationship and dependency between the hardware components.

The hardware representation may include the hardware components tagged with the hardware-component traits and the drivers and a hierarchical structure between the hardware components.

The hardware-component traits may indicate software executable by the hardware components.

The hardware-component traits may be included in a first set in which traits of the hardware components are standardized, the drivers may be included in a second set in which operations performable by the hardware components are standardized, and an indication of a combination of operations performable by the drivers may be included in a third set.

In another general aspect, an electronic device includes one or more host processors configured to: generate a mapping information by mapping each of hardware components included in a hardware representation of a target device to one or more hardware-component traits and one or more drivers based on the hardware representation of the target device, and generate topology information representing a connection relationship and dependency between the hardware components based on the hardware representation, wherein the hardware representation includes indications of the hardware components tagged with the one or more hardware-component traits and indications of the one or more drivers and a hierarchical structure between the hardware components.

The one or more hardware-component traits may be related to software executable by the hardware components.

The one or more hardware-component traits may be included in a first set in which traits of the hardware components are standardized, the one or more drivers may be included in a second set in which operations performable by the hardware components are standardized, and each of the one or more drivers may be a combination of one or more of a plurality of operations included in a third set.

The mapping information may include a first mapping table including mapping between the one or more hardware-component traits and the hardware components and a second mapping table mapping between the one or more drivers and the hardware components.

The one or more host processors may be further configured to receive a query about the hardware components from a compiler configured to compile a target application to execute the target application on the target device, and transmit a response to the query to the compiler based on the mapping information and/or the topology information.

The query may be either a query regarding whether one of the hardware components has a predetermined hardware-component trait, a query regarding whether one of the hardware components has a predetermined driver, or a query regarding whether one of the hardware components is included in a predetermined topology.

The one or more host processors may be further configured to determine the response to the query based on one of a first mapping table mapping information between the one or more hardware-component traits and the hardware components, a second mapping table mapping between the one or more drivers and the hardware components, and the topology information, and transmit the determined response to the compiler.

The compiler may use the response to the query when performing an optimization pass for compiling the target application.

Other features and aspects will be apparent from the following detailed description, the drawings, and the claims.

### BRIEF DESCRIPTION OF THE DRAWINGS

FIG. 1 illustrates an example of an electronic device, according to one or more embodiments.
FIG. 2 illustrates an example of an operation of a compiler, according to one or more embodiments.
FIG. 3 illustrates a compiler, according to one or more embodiments.
FIG. 4A illustrates a multilevel hardware representation and software stack for the same, according to one or more embodiments.
FIG. 4B illustrates an example of a hardware representation, according to one or more embodiments.
FIG. 5 illustrates an example of generating containers, according to one or more embodiments.
FIG. 6 illustrates an example of a query, according to one or more embodiments.
FIG. 7 illustrates an example method, according to one or more embodiments.
FIG. 8 illustrates another example method, according to one or more embodiments.
FIGS. 9 and 10 illustrate examples of an electronic device and a target device, according to one or more embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

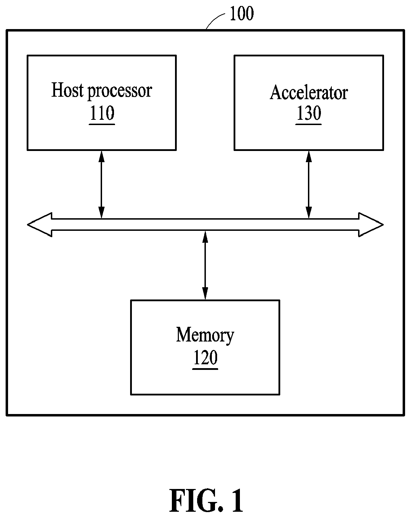

FIG. 1 illustrates an example of an electronic device, according to one or more embodiments.

Referring to FIG. 1, an electronic device 100 may include a host processor 110, a memory 120, and an accelerator 130. The host processor 110, the memory 120, and the accelerator 130 may communicate with each other through a bus, a network on a chip (NoC), a peripheral component interconnect express (PCIe), and the like. In the example of FIG. 1, only the components related to the example described herein are illustrated as being included in the electronic device 100. Thus, the electronic device 100 may also include other general-purpose components, in addition to the components illustrated in FIG. 1.

The host processor 110 may perform overall functions for controlling the electronic device 100. The host processor 110 may control the electronic device 100 overall by executing programs and/or instructions stored in the memory 120. The host processor 110 may be implemented as a central processing unit (CPU), a graphics processing unit (GPU), an application processor (AP), and/or the like, that are included in the electronic device 100, however, examples are not limited thereto. According to an example, the host processor 110 may translate a programming language into an intermediate language (intermediate representation (IR)) and a machine language (e.g., binary code) using a compiler.

The memory 120 is a hardware component for storing data processed in the electronic device 100 and data to be processed. In addition, the memory 120 may store an application, a driver, and the like to be driven by the electronic device 100. The memory 120 may include a volatile memory (e.g., dynamic random-access memory (DRAM)) and/or a non-volatile memory.

The electronic device 100 may include the accelerator 130 for performing an operation. The accelerator 130 is a separate device that processes certain tasks more efficiently than would a general-purpose processor or central processing unit (CPU) (e.g., the general-purpose host processor 110), due to the characteristics of the tasks. Here, one or more processing elements (PEs) included in the accelerator 130 may be utilized to perform the certain tasks. The accelerator 130 may be, for example, a neural processing unit (NPU), a tensor processing unit (TPU), a digital signal processor (DSP), a GPU, a neural engine, and the like that may perform an operation according to a neural network. According to an example, the accelerator 130 may execute some of the binary code translated through the compiler.

The host processor 110 may use the compiler to translate a target application expressed with source code, stored in the memory 120, that conforms with a programming language into IR or into binary code executable by a target device and hardware components included in the target device. The target device may be a device for executing the target application. The target device may include the electronic device 100 and another electronic device. In other words, the target (e.g., binary) code generated using the compiler may be used by the electronic device 100 or may be transmitted to be used by another electronic device. The host processor 110 may facilitate compiler optimization when translating (compiling) by using a query about the hardware components of the target device. The query about the hardware components may be about structural traits of the hardware components as well as traits and capabilities unrelated to the structural traits (e.g., driver characteristics). In other words, the host processor 110 may optimize the compilation of target application based on the traits and capabilities of the hardware components (some of which may be changeable), even if the exact types of the hardware components (e.g., NPU, GPU, etc.) are unknown.

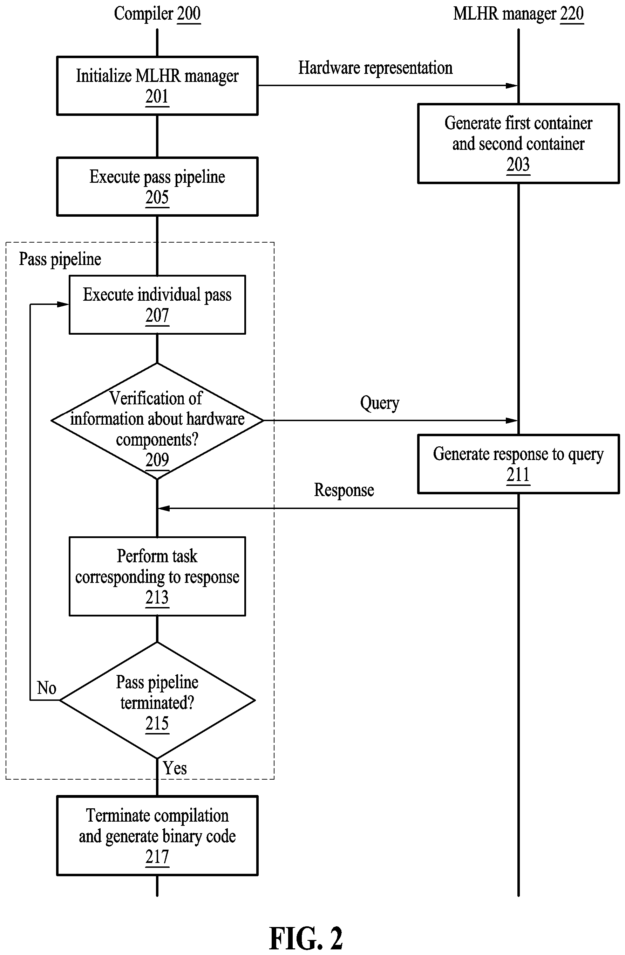

FIG. 2 illustrates an example of an operation of a compiler, according to one or more embodiments.

Referring to FIG. 2, a compiler 200 and a multi-level hardware representation (MLHR) manager 220 are shown. The compiler 200 and the MLHR manager 220 may be software (in the form of instructions) executed by a host processor, for example the host processor 110 of the electronic device 100. The compiler 200 may use information from the MLHR manager 220 for optimizing compilation of a target application. However, this is merely an example. In some implementations, and the compiler 200 may perform the operations of the MLHR manager 220 (i.e., functionality of the MLHR manager 220 may be included in the compiler 200). When the MLHR manager 220 is implemented apart from the compiler 200, the compiler 200 may interact with the MLHR manager 220 through an application programming interface (API) exposed by the MLHR manager 220.

In operation 201, the compiler 200 initializes the MLHR manager 220 after receiving a target application and a hardware representation of a target device on which a compilation of the target application is to be executed. The target application may include a deep learning model (e.g., a neural network) expressed in a predetermined programming language (e.g., Python), and the compiler 200 may be a deep learning compiler, e.g., a compiler that can translate high-level deep learning constructs (e.g., initialization/configuration, training, and execution of neural networks). However, this is merely an example, and the compiling related techniques described herein may be used for any type of application or compiler.

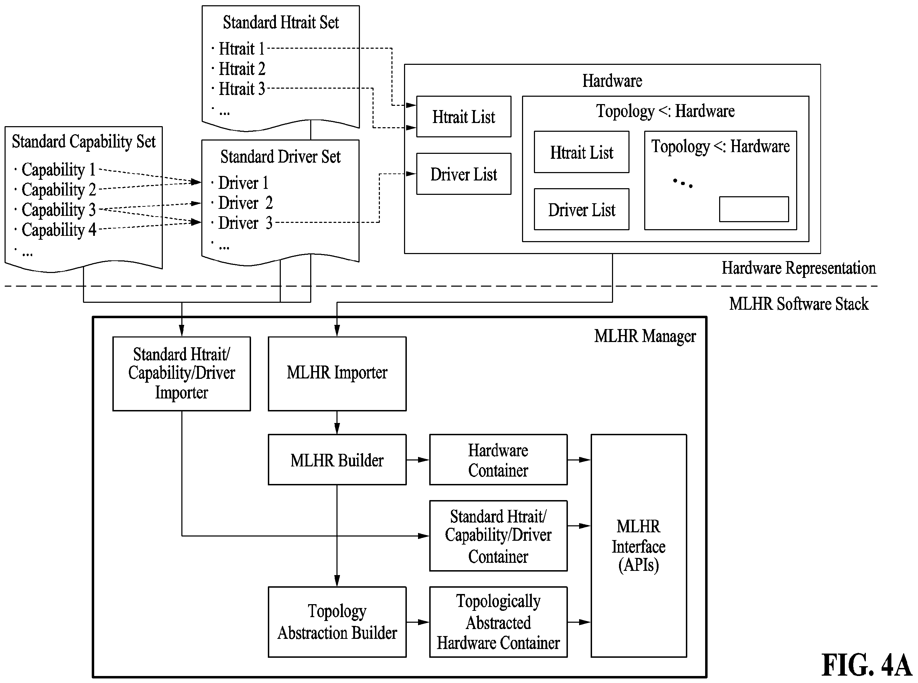

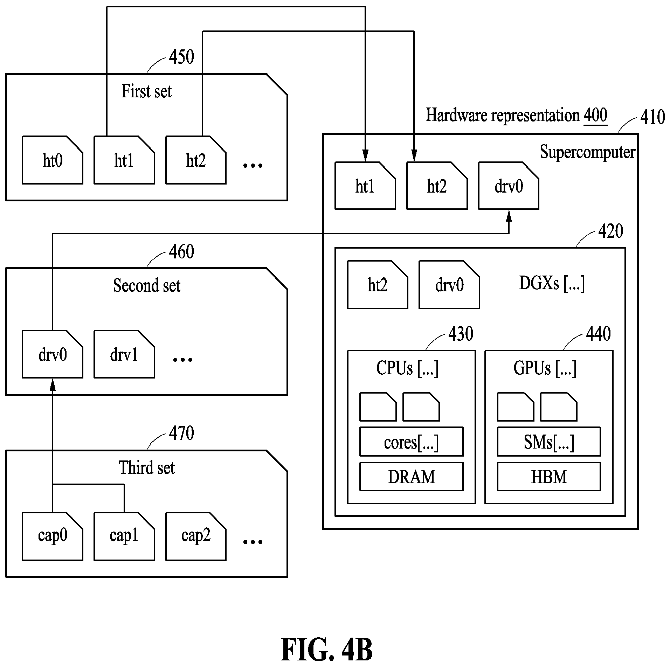

The compiler 200 may cause the MLHR manager 220 to generate a first container and a second container. "Container" as used herein does not imply the virtualization type of container, although such may be used. Rather, a container is any data structure or memory arrangement for encapsulating information. The compiler 200 may transmit the hardware representation of the target device to the MLHR manager 220 to generate the first container and the second container. The hardware representation is a representation of hardware components included in the target device that is to execute the target application. The hardware representation may include a representation of the hierarchical structure of the hardware components of the target device, that is, the hardware representation may represent relationships between hardware components of the target device (a complete hierarchical representation of the target device is not required). The hardware representation may include representations of hardware components that are tagged with hardware traits of the hardware components and drivers of the hardware components. For brevity, the phrase "hardware trait" is used herein as shorthand for "hardware-component trait", meaning a trait of a hardware component. The hardware representation is further described with reference to FIGS. 4A and 4B.

In operation 203, the MLHR manager 220 may generate the first container and the second container based on the hardware representation, as described next.

The MLHR manager 220 may map the hardware components to one or more hardware traits thereof based on the hardware representation. "Hardware trait" refers to any trait of the hardware and is not limited to hardware information per se, i.e., a "hardware trait" may be any trait of the corresponding hardware. For example, a hardware trait may be a trait related to software executable by the hardware components (or drivers, etc.), other than the physical structures of the hardware components. The hardware traits may include traits other than the physical structures/traits of the hardware components. For example, a hardware trait of a hardware component (represented in the hardware representation) may be about what type of software that is executable by the hardware component.

The MLHR manager 220 may, for example, map the hardware components to one or more corresponding drivers based on the hardware representation. The mapping of the drivers may indicate operations performable, via the drivers, by the hardware components. For example, a driver record may indicate whether a corresponding hardware component is capable of performing a convolution operation or a matrix operation.

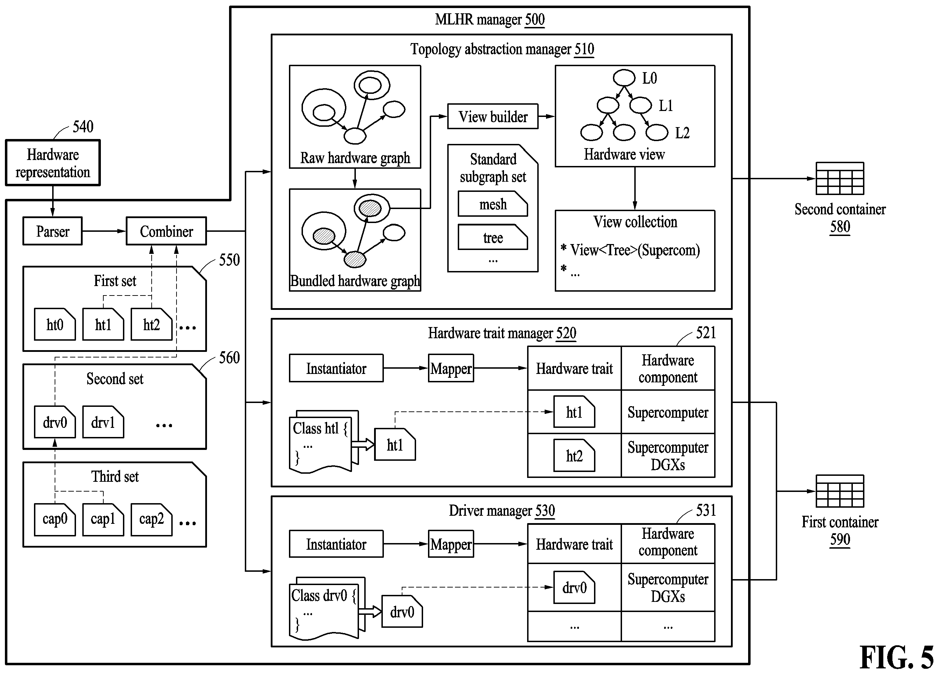

The first container may include a first mapping table and a second mapping table. The first mapping table may indicate, for each of the hardware components in the hardware representation, which hardware component is mapped to which of the one or more corresponding hardware traits. The second mapping table may indicate which of the hardware components are mapped to which of the one or more drivers. The first mapping table and the second mapping table are further described with reference to FIG. 5.

Additionally, the MLHR manager 220 may generate the second container based on the hardware representation. The second container may include topology information representing the connection relationships and dependencies between the hardware components.

The MLHR manager 220 may model not only the structural traits but also the traits and capabilities of the hardware components, using the containers.

In operation 205, the compiler 200 may execute a pass pipeline, shown with dashed-line box labeled "Pass pipeline" in FIG. 2. The pass pipeline may be a sequence of compiler passes that optimize the target application in the process of compiling so that a hardware component of the target device may be used to execute the target application when the target application is executed on the target device. For example, the pass pipeline may be a sequence of Pass A, Pass B, and Pass C. Each pass of the compiler 200 may be configured to optimize a target application and translate the target application into target code. In FIG. 2, operations 207 to 215 may be performed by one pass. Operations shown in FIG. 2 are relevant to the present disclosure; the pass pipeline may include other operations in addition to the operations shown in FIG. 2.

In operation 207, an individual pass of the pass pipeline begins being executed. For example, if the pass pipeline is a sequence of passes such as Pass A, Pass B, and Pass C, then Pass A may be executed first.

In operation 209, the compiler 200 may query for information about the hardware components. The query may begin by generating a query to verify or obtain the information about the hardware components. The query may be for verifying the information about the hardware components with for which the first and second containers are to be generated. The query may be include a query condition of whether one of the hardware components includes a predetermined hardware trait (i.e., a query for a particular hardware trait). The query may be one regarding whether one of the hardware components includes a predetermined/specific driver. The query may be a query regarding topology information about one of the hardware components.

Although FIG. 2 illustrates only a single operation of verifying/obtaining information about the hardware components for ease of description, one or more operations of verifying information about the hardware components may be included in one pass.

Further, a query may include a subordinate query. A query that includes a subordinate query may be referred to as a superordinate query. A subordinate query may be a query that queries more specific information based on a response to its superordinate query. A subordinate query may be a query that additionally queries in relation to a superordinate query if a response to the superordinate query is "YES".

In operation 211, the MLHR manager 220 receives the generated query and executes the query to generate a response to the query. The MLHR manager 220 may generate the response to the query based on the first container and the second container and transmit the generated response to the compiler 200.

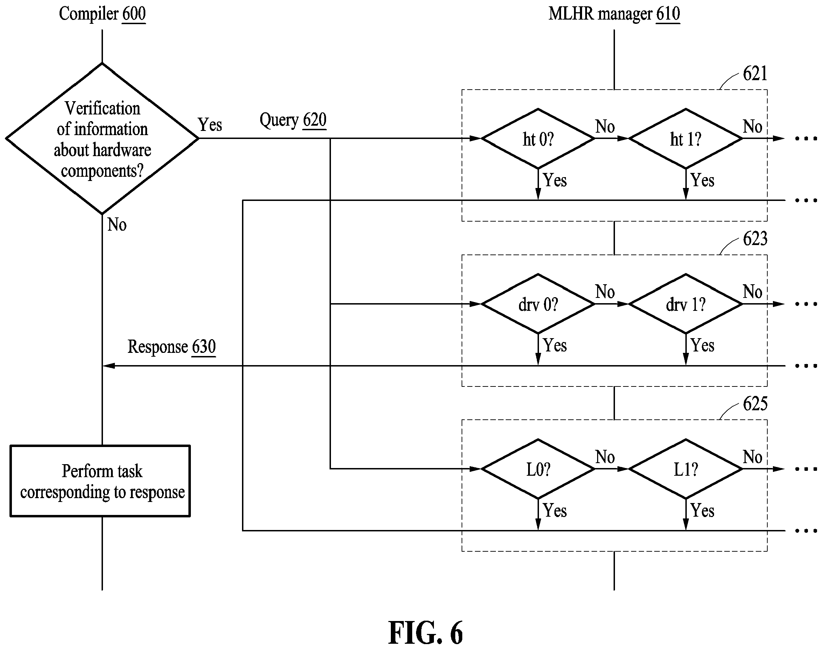

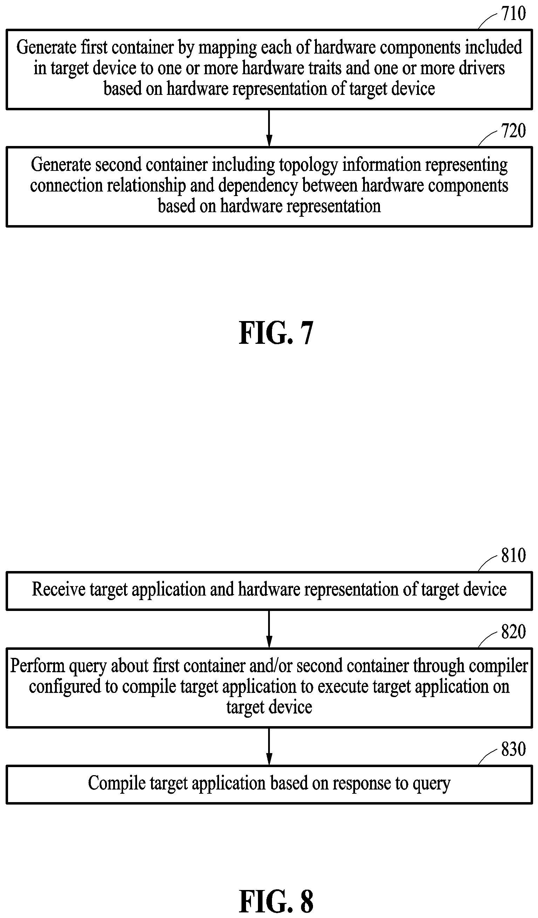

In operation 213, the compiler 200 receives the query response and performs an operation corresponding to the response. The compiler 200 performs optimization based on the response. The compiler 200 may map an operation of the target application to a predetermined hardware component based on the response. Operation 213 is further described with reference to FIG. 6, and performing an operation corresponding to the response by the compiler 200 is further described with reference to FIG. 7.

In operation 215, the compiler 200 determines whether the pass pipeline is terminated. That is, the compiler 200 may determine whether all passes of the pass pipeline have been executed. In operation 217, after the passes have all been executed, the compiler 200 terminates compilation and generates the optimized target code. The binary code may be transmitted to be used in the target device. The target code may be code optimized, by the compiler, considering software traits (i.e., a subset of the hardware traits) and capabilities (i.e., the drivers) as well as the structural traits (i.e., a topology) of the target device.

The compiler 200 may repeatedly perform operation 207 to execute a subsequent pass until all of the passes are executed. For example, in the pass pipeline, Pass A may be terminated, and Pass B may be executed.

According to the above-described operations, the compiler 200 may obtain the information about the hardware components through a response to a query and perform an operation based on the response. That is, the information about the hardware components may be decoupled from a compiler core algorithm and optimization decisions may be made by the compiler based on hardware information obtained at compile time. In other words, the compiler 200 may optimize compilation by receiving information about hardware components through a query. Through this, even if the compiler 200 is provided for use by the public, information about hardware components, which may be sensitive or proprietary, may not be disclosed with the compiler itself.

Further, according to the above-described operations, the information about the hardware components may include traits related to software (i.e., may include traits other than the physical structure) and/or an operation executable by the hardware components. Therefore, even if the type of a hardware component is unknown, the compiler 200 may perform optimization only with the information about the hardware components, where the information is not necessarily about the physical structure of the hardware components. As a result, the compiler 200 may be configured to be capable of optimizing for various arbitrary hardware components and thus may be more widely used.

A compiler for performing optimization through different pass pipelines respectively corresponding different types of hardware components is described next.

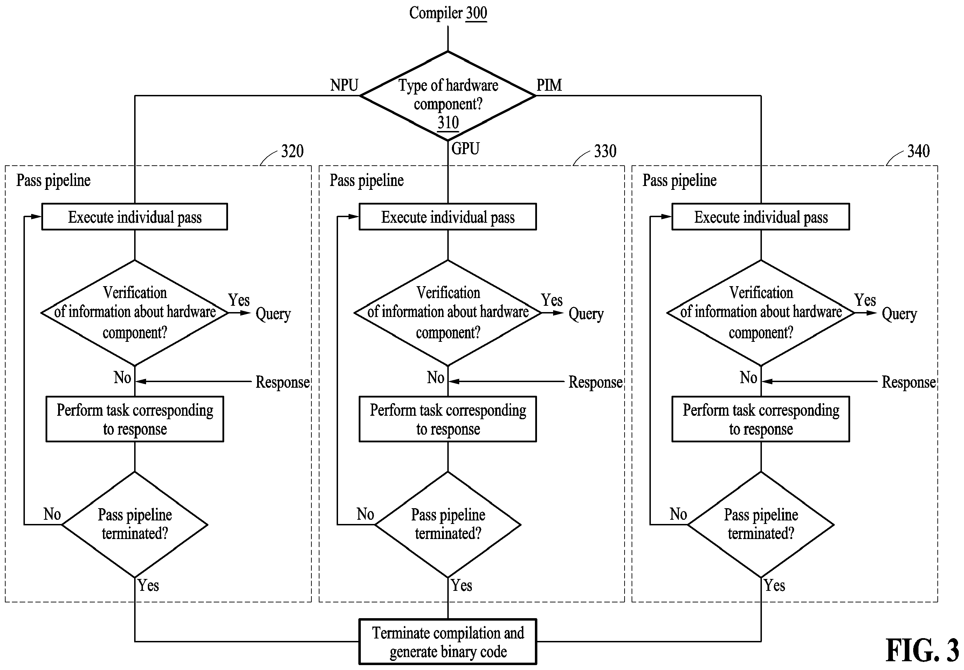

FIG. 3 illustrates a compiler, according to one or more embodiments. The compiler 300 in FIG. 3 can be contrasted with a compiler (described later) that uses non-structural (non-hardware) traits, or "hardware-component traits", of hardware components.

The compiler 300 may receive a target application (source code) and a hardware representation of a target device. In operation 310, after receiving the target application and the hardware representation, the compiler 300 may determine which type of hardware component (of the target device) is to execute the target application . Depending on the type of the hardware component that is to execute the target application in the target device, the compiler 300 may perform compilation according to different optimization pass pipelines. That is, an optimization pass pipeline may be selected that matches the type of hardware component determined in operation 310.

For example, if the type of the hardware component is an NPU, the compiler 300 may perform compilation according to an NPU-specific pass pipeline 320. If the type of the hardware component is a GPU, the compiler 300 may perform compilation according to a GPU-specific pass pipeline 330. If the type of the hardware component is processing in memory (PIM), the compiler 300 may perform compilation according to a PIM-specific pass pipeline 340. Since a different optimization pass pipeline may be used for each type of hardware component, the need to extend the compiler 300 may be reduced. In this example, the type of the hardware component may be generic in the sense that it is not limited to a particular model, manufacturer, or the like. In addition, a given pass pipeline may optimize in a way that is specific to the type of hardware component to which it corresponds.

The pass pipelines 320, 330, and 340 may otherwise generally function as the pass pipeline described with reference to FIG. 2.

Even though the compiler 300 uses different path pipelines for different types of represented hardware components, the compiler 300 may generate queries for obtaining information about the hardware component in any of the pass pipelines. The compiler 300 may receive a response to a query. In an example, the query may be configured to obtain only structural information of the hardware component. If software traits and capabilities (information other than the structural information of the hardware component) is hard-coded in a pass pipeline, then the pass pipeline is generally difficult to reuse, and thus, a different pass pipeline may be required for each of various hardware components.

The compiler 300 of FIG. 3 may lack reusability and may be difficult to extend to new hardware components when compared to the compiler 200 of FIG. 2 in which software traits and capabilities (information other than structural information of a hardware component) are decoupled from a path pipeline.

A hardware representation capable of being inputted into a compiler, and software for generating the hardware representation, are described next.

FIG. 4A illustrates a multilevel hardware representation (MLHR) and software stack for the same, according to one or more embodiments.

As shown in FIG. 4A, a hardware representation may be generated using a hardware trait list, a capability (driver) list, and a topology (lower layer). This approach may differ from a high-level hardware description language (HDL) approach, which is generally written to synthesize hardware, and which is intended to describe detailed parts to synthesize hardware. On the other hand, techniques described herein may use a hardware representation language configured to provide abstract information for software such as a compiler without having to represent detailed parts of hardware.

As noted above, a topology may correspond a piece of hardware and at the same time may be an element to be included in other hardware as topology, thereby enabling the representation of a hierarchical structure of pieces of hardware.

The hardware trait and capability (driver) lists associated with the hardware/topology may include a table/set of standard hardware traits, a table/set of drivers, and those present in a capability set. A hardware representation represented using this approach may be processed into information to be used for other software through a multi-level hardware representation (MLHR) layer software stack having an MLHR manager 420.

The MLHR manager 420 may implement an MLHR grammar to abstract and represent hardware. A description (e.g., declarative) compliant with the MLHR grammar may be used to specify a hardware representation. A set of standard hardware trait/capability/driver information may be stored in a corresponding standard hardware trait/capability/driver container through a standard hardware trait/capability/driver set importer. There may be associations between items in different sets. These sets of information may be provided to be queried by other software using the MLHR manager 420 (e.g., through an HMLR Interface/API).

Representable hardware may be input through an MLHR importer and stored in a hardware container through an MLHR builder. This information may be provided to be queried by other software using MLHR. The data-structured hardware information may be received through the MLHR importer, and topological information of this hardware may be abstracted into a structure convenient for software to use by a topology abstraction builder and then stored in a topologically abstracted container. This information may be provided to be queried by other software using the MLHR manager 420 (i.e., through its MHLR Interface/APIs).

The hardware modeling approach may remove the dependency of a compiler on multiple specific hardware, which may achieve high versatility and reusability. The hardware representation/modeling techniques may be used for other applications besides compiler optimization, for example, for implementing a high-level simulator for various hardware.

FIG. 4B illustrates an example of a hardware representation, according to one or more embodiments.

Referring to FIG. 4B, a hardware representation 400 of a target device is shown. The target device may be a device that is intended to execute the target application. The target device may include hardware components. In FIG. B, "ht" stands for "hardware trait", "cap" stands for "capability" (operation capability), and "drv" stands for "driver". The example hardware representation 400 may include links to sets of information such as a first set 450 of predefined hardware traits, a second set 460 of predefined drivers, and a third set of 470 of operation capabilities.

The hardware representation 400 may include a hierarchical structure between the hardware components included in the target device (although hierarchical structure is not necessarily required). The hardware representation 400 may represent the hierarchical structure between the hardware components using a topology. Each of the hardware components included in the target device may itself be a topology. A topology may be a topology of a first hardware component, and at the same time may be included in the topology of a second hardware component that encompasses the first hardware component. Accordingly, topology information may be information representing the relationships and dependencies between the hardware components. For example, a supercomputer representation 410 is an example of a hardware representation 400 representing a supercomputer. The supercomputer representation 410 may be the largest hardware unit represented by the example of a hardware representation 400. Deep learning graphics card (DGX) representations 420 may each represent a respective hardware component (e.g., DGX card) in the represented supercomputer. CPU representations 430 may represent respective hardware components (CPUs) and included in a DGX card of the supercomputer. GPU representations 440 may represent respective hardware components (GPUs) included in a DGX of the supercomputer. To summarize, the supercomputer representation 410 may include a DGX card representation 420 with GPU representations 440 and CPU representations may represent a corresponding DGX card of the supercomputer.

The hardware component representations may be tagged with one or more hardware-component traits (i.e., hardware traits) in the hardware representation 400. The hardware traits may be traits other than traits of a physical structure of a represented hardware component. The hardware traits may be software traits of a hardware component (e.g., variable traits that might not be known/knowable based only on the hardware itself). In other words, the hardware traits may include traits related to the viewpoint of software viewing a hardware component. The hardware traits may be about what type of software is executable by a hardware component. The hardware traits may be standardized and predefined. A set of predefined hardware traits may be referred to as a first set 450. One or more hardware traits with which the hardware components are tagged in the hardware representation 400 may be included in (and drawn from) the first set 450. For example, hardware traits ht1 and ht2 with which the supercomputer representation 410 is tagged may be included in the first set 450.

The hardware component representations may be tagged with driver records in the hardware representation 400. The driver records may be about operations performable by drivers in combination with correspondingly driven hardware components. The one or more driver records may indicate operations (of corresponding drivers) such as a convolution operation, a matrix operation, a vector operation, or the like. The drivers/driver records may be standardized and predefined. A set of predefined drivers/driver records may be included in (and drawn from) a second set 460. In other words, standard operations performable by the standard hardware components may be predefined in the second set 460. One or more driver records with which the hardware components are tagged in the hardware representation 400 may be included in the second set 460.

A driver record included in the second set 460 may be a combination of one or more operations (or capabilities) included in a third set 470. For example, a convolution operation included in the second set 460 may be a combination of one or more of the operations included in the third set 470. For example, drv0 included in the second set 460 may be a combination of cap0 and cap1 in the third set 470. The third set 470 may include a indications of operations constituting the drivers included in the second set 460. The third set 470 may include indications of operations such as addition, subtraction, multiplication, and division. In other words, the third set 470 may be a set including capabilities of a minimum unit of a driver. A driver included in the second set 460 may have a combination of the operations/capabilities included in the third set 470.

Since the first set 450, the second set 460, and the third set 470 are used to generate mapping tables later, the first set 450, the second set 460, and the third set 470 may be provided to a compiler.

According to an example, a particular target device may not be describable with the information in the first set 450, the second set 460, and the third set 470. For example, when one of the hardware components of the particular target device is capable of performing a convolution operation, but a convolution operation is not included in the second set 460, the target device may not be describable. When a target device with the hardware representation 400 is not describable using the first set 450 and the second set 460, a compiler developer may add a new hardware trait, driver record, and/or operation/capability. The new hardware trait may be a combination of one or more of the hardware traits included in the first set 450. Alternatively, the new hardware trait may be an entirely new hardware trait defined by the compiler developer. The new driver record may be a combination of one or more of the driver records included in the second set 460 and/or a combination of one or more of the operations included in the third set 470. Alternatively, the new driver may be an entirely new driver defined by the compiler developer.

Next, a method of generating containers using the hardware representation 400, the first set 450, the second set 460, and the third set 470 is described.

FIG. 5 illustrates an example of generating containers, according to one or more embodiments.

Referring to FIG. 5, FIG. 5 shows a method of generating a first container 590 and a second container 580 by an MLHR manager 500 receiving a hardware representation 510.

The MLHR manager 500 may receive the hardware representation 540 of a target device. The description of the hardware representation 540 is generally the same as the description provided with reference to FIG. 4B. For ease of description, it is assumed that the hardware representation 540 is the hardware representation 400 of FIG. 4B. The MLHR manager 500 may include a topology abstraction manager 510, a hardware trait manager 520, and a driver manager 530.

The MLHR manager 500 may first parse the received hardware representation 540 using a parser. The hardware representation 540 may be code conforming to a MLHR grammar and the content/meaning of the hardware representation 540 may be obtained from a parser configured to parse the MLHR grammar. The MLHR manager 500 may include a combiner that combines the parsed hardware representation 540 with hardware traits and drivers included in the hardware representation 540. The hardware traits and drivers included in the hardware representation 540 may be loaded from a first set 550 and a second set 560. The description of the first set 550 and the second set 560 is generally the same as the description provided with reference to FIG. 4B.

The hardware trait manager 520 may map each of hardware components in the hardware representation 540 to one or more corresponding hardware traits using an instantiator and a mapper. Each of the hardware components included in the represented target device may be mapped to the one or more hardware traits. A first mapping table 521 in which each of the hardware components included in the target device is mapped to one or more hardware traits may be generated. The first mapping table 521 may include mapping information in which the hardware components are mapped to one or more hardware traits based on the hardware representation 540.

For example, a supercomputer component may be tagged with ht1 and ht2 in the hardware representation 540. In the first mapping table 521, ht1 may be mapped with the supercomputer. In the first mapping table 521, ht2 may be mapped with hardware components that are DGXs.

The driver manager 530 may map each (or some) of the hardware components in the hardware representation 540 to one or more drivers using an instantiator and a mapper. Each of the hardware components included in a target device may be mapped to the one or more drivers. A second mapping table 531 in which each of the hardware components included in the target device is mapped to one or more drivers may be generated. The second mapping table 531 may include mapping information in which the hardware components are mapped to one or more drivers based on the hardware representation 540.

For example, the supercomputer may be tagged with drv0 in the hardware representation 540. In the second mapping table 531, drv0 may be mapped with the supercomputer (not shown). In the second mapping table 531, drv0 may also be mapped with the DGXs.

The first container 590 may include the first mapping table 521 and the second mapping table 531. The first mapping table 521 and the second mapping table 531 stored in the first container 590 may be provided (accessed) by a query received from other software (e.g., a compiler).

The topology abstraction manager 510 may generate a raw hardware graph representing physical connection relationships between hardware components of the hardware representation 540. The topology abstraction manager 510 may generate a bundled hardware graph obtained by abstracting the raw hardware graph. The bundled hardware graph may be a graph obtained by simplifying the raw hardware graph. The bundled hardware graph may be a graph obtained by abstracting the raw hardware graph down to a hardware unit recognizable by software. The topology abstraction manager 510 may convert the bundled hardware graph into a hardware view using a view builder. The hardware view may be obtained by abstracting the bundled hardware graph to cause the software to recognize the structural traits of a hardware component. For example, the hardware view may abstract the bundled hardware graph in a tree form and a mesh form. The hardware view may be topology information that enables the software to recognize the structural traits of a hardware component. The hardware view may be embodied as a view collection, which may be code (e.g., code in a markup language) that is amenable to being queried.

The second container 580 may include hardware views. For example, the second container 580 may include a hardware view abstracted in a tree form and a hardware view abstracted in a mesh form. In other words, the second container 580 may include topology information of the hardware components of the hardware representation. The topology information stored in the second container 580 may be provided (e.g., to a compiler) by a query received from other software (e.g., the compiler).

Hereinafter, a query and a response to the query according to an example will be described.

FIG. 6 illustrates an example of a query, according to one or more embodiments.

As described with reference to FIG. 2, in a pass pipeline, a compiler 600 may generate a query 620 when hardware information is required (or useable). The query 620 may be transmitted to an MLHR manager 610. For ease of description, only operations related to the query 620 are shown in FIG. 6.

The query 620 may be one of a first query 621, a second query 623, or a third query 625.

The first query 621 may be a query regarding whether one of hardware components includes a predetermined hardware trait. The predetermined hardware trait being queried for may be one of the hardware traits included in a first set. The first query 621 may include one or more queries about hardware traits. For example, the first query 621 may include a query regarding whether any of the hardware components (in the hardware representation) includes trait ht0. The first query 621 may include a query regarding whether any of the hardware components includes ht1 if it does not include ht0.

The second query 623 may be a query regarding whether any of the hardware components includes a predetermined driver. The predetermined driver may be any of the drivers included in a second set. The second query may include one or more queries about drivers. For example, the second query 623 may include a query regarding whether any of the hardware components includes drv 0. The second query 623 may include a query regarding whether one of the hardware components includes drv 1 if it does not include drv 0.

The third query 625 may be a query regarding whether any of the hardware components is included in a predetermined topology. The third query 625 may include one or more queries about a topology. For example, the third query 625 may include a query regarding whether one of the hardware components corresponds to a layer L0 in a hardware view of a tree form. The third query 625 may include a query regarding whether one of the hardware components corresponds to a layer L1 if it does not correspond to the layer L0.

The MLHR manager 610 may transmit a response 630 to the query 620 to the compiler 600. The MLHR manager 610 may transmit the response 630 to the query 620 to the compiler 600 based on a first container and/or a second container.

Upon receiving the first query 621, the MLHR manager 610 may transmit a response 630 to the first query 621 to the compiler 600 based on the first container. Upon receiving the first query 621, the MLHR manager 610 may transmit the response 630 to the first query 621 to the compiler 600 based on a first mapping table including mapping information between one or more hardware traits and the hardware components. The MLHR manager 610 may transmit the response 630 to the first query 621 to the compiler 600 by referring to the first mapping table.

Upon receiving the second query 623, the MLHR manager 610 may transmit a response 630 to the second query 623 to the compiler 600 based on the first container. Upon receiving the second query 623, the MLHR manager 610 may transmit the response 630 to the second query 623 to the compiler 600 based on a second mapping table including mapping information between one or more drivers and the hardware components.

Upon receiving the third query 625, the MLHR manager 610 may transmit a response 630 to the third query 625 to the compiler 600 based on the second container. Upon receiving the third query 625, the MLHR manager 610 may transmit the response 630 to the third query 625 to the compiler 600 based on the second container including topology information.

The compiler 600 may receive the response 630 from the MLHR manager 610 and perform an operation corresponding to the response 630.

The response 630 to the first query 621 may be a response that one of the hardware components includes the predetermined hardware trait. The compiler 600 may compile a target application to be optimized for the corresponding hardware trait, as a task corresponding to the response.

The response 630 to the second query 623 may be a response that one of the hardware components includes the predetermined driver. The compiler 600 may map the predetermined driver to the hardware component such that the hardware component including the predetermined driver may perform the predetermined driver, as a task corresponding to the response.

The response 630 to the third query 625 may be a response that one of the hardware components is included in the predetermined topology. The compiler 600 may execute a pass corresponding to the predetermined topology, as a task corresponding to the response.

Even if the type of a hardware component is unknown, the compiler 600 may verify the trait and capability of a hardware component of the target device (represented by the hardware representation) through the query described above. The compiler 600 may optimize the compilation of the target application through a task corresponding to the response to the query.

FIG. 7 illustrates an example of an operating method of an electronic device, according to one or more embodiments.

In the following examples, operations may be performed sequentially, but are not necessarily performed sequentially. For example, the operations may be performed in different orders, and at least two of the operations may be performed in parallel.

In operation 710, an electronic device may generate a first container by mapping each of hardware components included in a target device to one or more hardware traits and one or more drivers based on a hardware representation of the target device.

In operation 720, the electronic device may generate a second container including topology information representing the connection relationship and dependency between the hardware components based on the hardware representation.

The hardware representation may include hardware components tagged with one or more hardware traits and one or more drivers and a hierarchical structure between the hardware components.

FIG. 8 illustrates an example of an operating method of an electronic device, according to one or more embodiments.

In the following examples, operations may be performed sequentially, but are not necessarily performed sequentially. For example, the operations may be performed in different orders, and at least two of the operations may be performed in parallel.

In operation 810, an electronic device may receive a target application and a hardware representation of a target device.

In operation 820, the electronic device may perform a query about a first container and/or a second container, through a compiler configured to compile the target application to execute the target application on the target device.

The first container may include mapping tables in which each of hardware components included in the target device is mapped to one or more hardware traits and one or more drivers based on the hardware representation. The second container may include topology information representing the connection relationship and dependency between the hardware components based on the hardware representation.

In operation 830, the electronic device may compile the target application based on a response to the query.

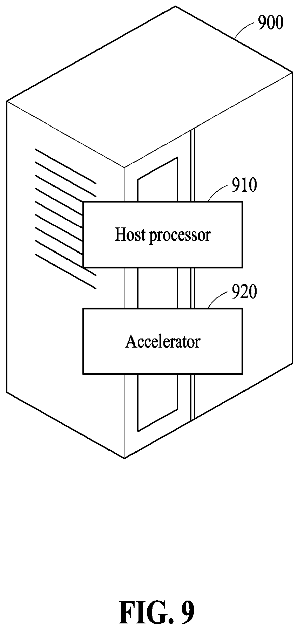

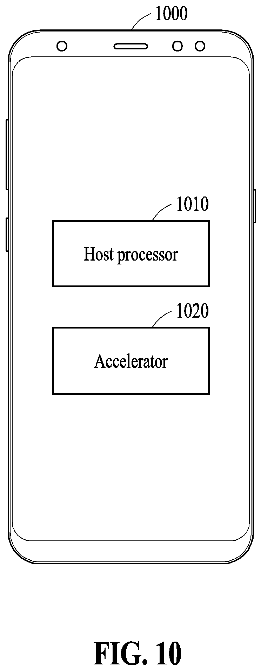

FIGS. 9 and 10 illustrate examples of an electronic device and a target device, according to one or more embodiments.

Referring to FIG. 9, an electronic device may be implemented as a server 900. The server 900 may be a separate device distinguished from a user terminal controlled by a user, and may communicate with one or more user terminals through a wired and/or wireless network. The server 900 may receive requests that are simultaneously transmitted from multiple users through their user terminals. The server 900 may generate binary code by compiling a target application through a host processor 910. The server 900 may transmit the binary code to the user terminal (i.e., a target device). Alternatively, the server 900 may execute the binary code through an accelerator 920. The user terminal may be a device capable of executing binary code, and may include various computing devices such as a smart phone, a tablet, a laptop and a personal computer, various wearable devices such as a smart watch and smart glasses, various home appliances such as a smart speaker, a smart TV and a smart refrigerator, a smart car, a smart kiosk, and an Internet of things (IoT) device.

Referring to FIG. 10, a target device may be implemented as a user terminal 1000. In FIG. 10, the user terminal 1000 is illustrated as a smart phone for ease of description. However, any device capable of executing binary code may apply thereto without limitation. The user terminal 1000 may execute binary code received from a server. When the binary code is for a host processor 1010, the user terminal 1000 may execute the binary code using the host processor 1010. When the binary code is for an accelerator 1020, the user terminal 1000 may execute the binary code using the accelerator 1020. However, according to an example, the host processor 1010 of the user terminal 1000 may compile a target application. In other words, the user terminal 1000 may be an electronic device configured to compile a target application. The user terminal 1000 may transmit the compiled binary code to a separate target device and cause the target device to execute the binary code.

The computing apparatuses, the electronic devices, the processors, the memories, the displays, the information output system and hardware, the storage devices, and other apparatuses, devices, units, modules, and components described herein with respect to FIGS. 1-9 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-9 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims.

### The following is a list of further preferred embodiments of the invention:

Embodiment 1. An operating method of an electronic device, the operating method comprising:
   generating, based on a hardware representation of a target device, a mapping, by mapping hardware components represented in the hardware representation of the target device to one or more hardware-component traits and to one or more drivers; and
   generating, based on the hardware representation, topology information representing a connection relationship and dependency between the hardware components of the target device represented in the hardware representation,
   wherein the hardware representation comprises representations of the hardware components tagged with the one or more hardware-component traits and representations of the one or more drivers and a hierarchical structure between the hardware components.
Embodiment 2. The operating method of embodiment 1, wherein the one or more hardware-component traits indicate software executable by the hardware components.
Embodiment 3. The operating method of embodiment 1, wherein
   the one or more hardware-component traits are included in a first set in which traits of standardized hardware components are standardized,
   the one or more drivers are included in a second set in which operations performable by the standardized hardware components are standardized, and
   wherein combinations of operations of the respective drivers in the second set are included in a third set.
Embodiment 4. The operating method of embodiment 1, wherein the mapping comprises
   a first mapping table mapping between the one or more hardware-component traits and the hardware components and
   a second mapping table mapping between the one or more drivers and the hardware components.
Embodiment 5. The operating method of embodiment 1, further comprising:
   receiving a query about the hardware components from a compiler compiling a target application to execute on the target device;
   generating a response to the query based on the first container and/or the second container;
   transmitting the response to the compiler; and
   optimizing, by the compiler, the compiling of the target application to execute on the target device based on the response.
Embodiment 6. The operating method of embodiment 5, wherein the query is either a query regarding whether one of the hardware components comprises a predetermined hardware-component trait, a query regarding whether one of the hardware components comprises a predetermined driver, or a query regarding whether one of the hardware components is included in a predetermined topology.
Embodiment 7. The operating method of embodiment 6, wherein
   the generating the response to the query is based on
   the mapping, which comprises
      a first mapping table mapping between the one or more hardware-component traits and the hardware components,
      a second mapping table comprising mapping information between the one or more drivers and the hardware components, or
   the hardware representation, which comprises the topology information.
Embodiment 8. The operating method of embodiment 1, wherein the generating mapping and the topology information is performed based on compiling a target application for execution on the target device, and wherein the compiling optimizes the target application to execute on the target device based on the mapping and topology information.
Embodiment 9. An operating method of an electronic device, the operating method comprising:
   receiving a target application and a hardware representation of a target device;
   generating a query on mapping tables and/or topology information, by a compiler; and
   compiling, by the compiler, the target application to execute on the target device based on a response to the query,
   wherein the mapping tables are based on the hardware representation and indicate which hardware components included in the target device are mapped to (i) which hardware-component traits and to (ii) which drivers, and
   the topology information is based on the hardware representation and indicates a connection relationship and dependency between the hardware components.
Embodiment 10. The operating method of embodiment 9, wherein the hardware representation comprises the hardware components tagged with the hardware-component traits and the drivers and a hierarchical structure between the hardware components.
Embodiment 11. The operating method of embodiment 9, wherein the hardware-component traits indicate software executable by the hardware components.
Embodiment 12. The operating method of embodiment 9, wherein
   the hardware-component traits are included in a first set in which traits of the hardware components are standardized,
   the drivers are included in a second set in which operations performable by the hardware components are standardized, and
   an indication of a combination of operations performable by the drivers are included in a third set.
Embodiment 13. An electronic device comprising:
   one or more host processors configured to:
   generate a mapping information by mapping each of hardware components included in a hardware representation of a target device to one or more hardware-component traits and one or more drivers based on the hardware representation of the target device, and generate topology information representing a connection relationship and dependency between the hardware components based on the hardware representation,
   wherein the hardware representation comprises indications of the hardware components tagged with the one or more hardware-component traits and indications of the one or more drivers and a hierarchical structure between the hardware components.
Embodiment 14. The electronic device of embodiment 13, wherein the one or more hardware-component traits are related to software executable by the hardware components.
Embodiment 15. The electronic device of embodiment 13, wherein
   the one or more hardware-component traits are included in a first set in which traits of the hardware components are standardized,
   the one or more drivers are included in a second set in which operations performable by the hardware components are standardized, and
   each of the one or more drivers is a combination of one or more of a plurality of operations included in a third set.
Embodiment 16. The electronic device of embodiment 13, wherein the mapping information comprises a first mapping table comprising mapping between the one or more hardware-component traits and the hardware components and a second mapping table mapping between the one or more drivers and the hardware components.
Embodiment 17. The electronic device of embodiment 13, wherein the one or more host processors is further configured to receive a query about the hardware components from a compiler configured to compile a target application to execute the target application on the target device, and transmit a response to the query to the compiler based on the mapping information and/or the topology information.
Embodiment 18. The electronic device of embodiment 17, wherein the query is either a query regarding whether one of the hardware components has a predetermined hardware-component trait, a query regarding whether one of the hardware components has a predetermined driver, or a query regarding whether one of the hardware components is included in a predetermined topology.
Embodiment 19. The electronic device of embodiment 18, wherein the one or more host processors is further configured to determine the response to the query based on one of a first mapping table mapping information between the one or more hardware-component traits and the hardware components, a second mapping table mapping between the one or more drivers and the hardware components, and the topology information, and transmit the determined response to the compiler.
Embodiment 20. The electronic device of embodiment 18, wherein compiler uses the response to the query when performing an optimization pass for compiling the target application.

## Claims

1. An operating method of an electronic device, the operating method comprising:
generating, based on a hardware representation of a target device, a mapping, by mapping hardware components represented in the hardware representation of the target device to one or more hardware-component traits and to one or more drivers; and
generating, based on the hardware representation, topology information representing a connection relationship and dependency between the hardware components of the target device represented in the hardware representation,
wherein the hardware representation comprises representations of the hardware components tagged with the one or more hardware-component traits and representations of the one or more drivers and a hierarchical structure between the hardware components.

2. The operating method of claim 1, wherein the one or more hardware-component traits indicate software executable by the hardware components.

3. The operating method of claim 1 or 2, wherein
the one or more hardware-component traits are included in a first set in which traits of standardized hardware components are standardized,
the one or more drivers are included in a second set in which operations performable by the standardized hardware components are standardized, and
wherein combinations of operations of the respective drivers in the second set are included in a third set.

4. The operating method of one of claims 1 to 3, wherein the mapping comprises
a first mapping table mapping between the one or more hardware-component traits and the hardware components and
a second mapping table mapping between the one or more drivers and the hardware components.

5. The operating method of one of claims 1 to 4, further comprising:
receiving a query about the hardware components from a compiler compiling a target application to execute on the target device;
generating a response to the query based on the first container and/or the second container;
transmitting the response to the compiler; and
optimizing, by the compiler, the compiling of the target application to execute on the target device based on the response.

6. The operating method of claim 5, wherein the query is either a query regarding whether one of the hardware components comprises a predetermined hardware-component trait, a query regarding whether one of the hardware components comprises a predetermined driver, or a query regarding whether one of the hardware components is included in a predetermined topology.

7. The operating method of claim 6, wherein
the generating the response to the query is based on
the mapping, which comprises
a first mapping table mapping between the one or more hardware-component traits and the hardware components,
a second mapping table comprising mapping information between the one or more drivers and the hardware components, or
the hardware representation, which comprises the topology information.

8. The operating method of one of claims 1 to 7, wherein the generating mapping and the topology information is performed based on compiling a target application for execution on the target device, and wherein the compiling optimizes the target application to execute on the target device based on the mapping and topology information.

9. A computer-readable storage medium storing instructions that, when executed by a processor of an electronic device, cause the processor to perform the method comprising:
after receiving a target application and a hardware representation of a target device, generating a query on mapping tables and/or topology information; and
compiling the target application to execute on the target device based on a response to the query,
wherein the mapping tables are based on the hardware representation and indicate which hardware components included in the target device are mapped to (i) which hardware-component traits and to (ii) which drivers, and
the topology information is based on the hardware representation and indicates a connection relationship and dependency between the hardware components.

10. An electronic device comprising:
one or more host processors configured to:
generate a mapping information by mapping each of hardware components included in a hardware representation of a target device to one or more hardware-component traits and one or more drivers based on the hardware representation of the target device, and generate topology information representing a connection relationship and dependency between the hardware components based on the hardware representation,
wherein the hardware representation comprises indications of the hardware components tagged with the one or more hardware-component traits and indications of the one or more drivers and a hierarchical structure between the hardware components.

11. The electronic device of claim 10, wherein the one or more hardware-component traits are related to software executable by the hardware components, or
wherein the one or more hardware-component traits are included in a first set in which traits of the hardware components are standardized, the one or more drivers are included in a second set in which operations performable by the hardware components are standardized, and each of the one or more drivers is a combination of one or more of a plurality of operations included in a third set, or
wherein the mapping information comprises a first mapping table comprising mapping between the one or more hardware-component traits and the hardware components and a second mapping table mapping between the one or more drivers and the hardware components.

12. The electronic device of claim 10, wherein the one or more host processors is further configured to receive a query about the hardware components from a compiler configured to compile a target application to execute the target application on the target device, and transmit a response to the query to the compiler based on the mapping information and/or the topology information.

13. The electronic device of claim 12, wherein the query is either a query regarding whether one of the hardware components has a predetermined hardware-component trait, a query regarding whether one of the hardware components has a predetermined driver, or a query regarding whether one of the hardware components is included in a predetermined topology.

14. The electronic device of claim 13, wherein the one or more host processors is further configured to determine the response to the query based on one of a first mapping table mapping information between the one or more hardware-component traits and the hardware components, a second mapping table mapping between the one or more drivers and the hardware components, and the topology information, and transmit the determined response to the compiler.

15. The electronic device of claim 14, wherein compiler uses the response to the query when performing an optimization pass for compiling the target application.
